# EUROPÄISCHE PATENTANMELDUNG

(11) **EP 2 431 456 A1**
(43) Veröffentlichungstag der Anmeldung: **21.03.2012**
(21) Anmeldenummer: 11007590.0
(22) Anmeldetag: 16.09.2011
(51) Int. Cl.: C11D 3/22, C08G 63/00, C08G 63/668, D06M 15/19

(54) **Neue amphiphile Polykondensate und ihre Verwendung in Kombination mit Polyester oder polyesterhaltigen Oberflächen**

(30) Priorität: 17.09.2010 DE 102010045778
(71) Anmelder: Polyprec GmbH, 63571 Gelnhausen (DE)
(72) Erfinder: Lerch, Alexander, Dr., 63571 Gelnhausen (DE); Schade, Manfred, 68200 Mulhouse (FR)
(74) Vertreter: Hollatz, Christian

(57) **Zusammenfassung**

Die vorliegende Erfindung betrifft Hydrophil terminierte amphiphile Polykondensate mit einem Gehalt ab 1 Gew% an copolymerisiertem Diol auf Basis von hydrierten und zweifach dehydratisierten Aldo- und Ketohexosen und deren Applikation in Kombination mit Polyester- und polyesterhaltigen Oberflächen.

## Beschreibung

Es ist seit langem bekannt, dass Polyesteroberflächen durch geeignete amphiphile Polymere modifiziert werden können, wobei die Oberflächen hierbei semipermanent hydrophilisiert werden. Dieser Effekt wird heute bereits in mehreren Anwendungen kommerziell genutzt.

In der Waschmittelindustrie werden solche Verbindungen auch als Soil Release Polymere bezeichnet. Diese sind nichtionischer oder anionischer Natur, wobei endverschlossene oder auch nicht endverschlossene Polykondensate in der einschlägigen Literatur beschrieben werden. So beschreibt beispielsweise Gosselink in US4721580 anionisch endverschlossene Strukturen als Soil Release Polymere und deren Einsatz in Wasch- und Reinigungsmitteln. Neuere Anmeldungen von Morschhaeuser et al beschreiben nichtionische Verbindungen in DE102008023803A1 und anionische Modifikationen in DE 102005061058A1 sowie deren Isolierung in DE 102008028409A1. Für die Anwendung in der Textilindustrie sind amphiphile Polymere, z.B. Milease^{™} T von ICI, schon lange bekannt und werden in der Textilausrüstung eingesetzt zur Hydrophilisierung von Polyesterfasern und Polyestermischgeweben. So beschreibt beispielsweise McIntyre in US 3416952 die Beschichtung von Polyesterfasern mit hydrophilen Polykondensaten und Waschversuche zur Optimierung der Waschbeständigkeit ausgerüsteter Textilien.

Eine weitere Anwendung findet diese Technologie in der Herstellung von Papier. Durch den steigenden Einsatz von Recyclingpapier und dem geringeren Verbrauch an Wasser spielen klebende Verunreinigungen (Stickies) im Altpapier eine besondere Rolle. Stickies basieren im Wesentlichen auf den verschiedenartigen Klebstoffen (Briefverschlüsse, Post its, Klebebandrückstände, etc. ), die sich besonders im Recyclingprozess auf Maschinenteile legen, wobei dem Nasspapiersieb eine besondere Bedeutung zukommt. So beschreibt bereits 1989 Smith et al. in US 5209823 die Synthese von nichtionischen offenkettigen Polykondensaten und 1993 in US 5415739 deren Anwendung als Hilfsmittel im ppm-Bereich zur Vermeidung von Anklebungen auf Polyesteroberflächen, speziell während der Herstellung von Papier. Alternative Technologien werden beispielsweise von Kohler et al in EP 1268923 B1 beschrieben. Hierbei werden Mischungen von Polyvinylalkoholen und Bentonit benutzt, wobei hohe Konzentrationen von 0,1 - 1 % an Polyvinylalkohol benötigt werden um Effekte zu erhalten.

Alle bisher beschriebenen amphiphilen Polykondensate sind mit herkömmlichen Bausteinen aufgebaut. Im Vordergrund stehen dabei aromatische und aliphatische Dicarbonsäuren, die auch sulfoniert sein können. Monocarbonsäuren, sulfoniert und nicht sulfoniert, und primäre Alkohole, die sulfoniert und oder alkoxyliert sein können, werden als Endcaps eingesetzt. Diole auf Basis Ethylenglykol, Propylenglykol und Polyalkylenglykole, werden als Diol Komponente beschrieben. Triole und mehrwertige Alkohole wie z.B. Glycerin, Pentaerythrit, Sorbitol und davon abgeleitete Verbindungen werden als vernetzende Komponenten eingesetzt. Polyfunktionelle Vernetzer, die sowohl Alkoholfunktionen als auch Säurefunktionen enthalten, wie z.B. Citronensäure oder auch Weinsäure werden in der einschlägigen Patentliteratur beschrieben, siehe z.B. in Morschhäuser et al in DE 102008023803 A1.

Aufgrund des steigenden Preises für Rohöl kommen in den letzten Jahren alternative Rohstoffe in den Fokus. Dem Fachmann ist aus Standardwerken bekannt, dass aus Aldo- und Ketohexosen, wie z.B. Glucose, Galactose, Mannose, etc. durch Hydrierung Hexole zugänglich sind, wie z.B. Sorbitol aus Glucose oder Mannitol aus Mannose. Weiterhin ist bekannt, dass aus diesen Produkten durch zweifache Dehydratisierung Diole gewonnen werden können. So entsteht beispielsweise aus Sorbitol Isosorbid (Cas-Nr.: 652-67-5), auch 1,4-3,6-Dianhydro-sorbit genannt, das kommerziell verfügbar ist (Fa Roquette, Frankreich). Isosorbid wird in vielen Patenten als glykolische Komponente beschrieben, um die Eigenschaftsprofile von formbaren Artikeln zu verändern. Adelmann beschreibt Isosorbid als glykolische Komponente in US 6656577 zur Herstellung von klassischen hydrophoben Polyesterkondensaten und deren Verwendung als Ausgangsmaterial für die Herstellung von Flaschen, Filmen und Fasern.

Auf isosorbidhaltige amphiphile Systeme wird bislang nur wenig eingegangen. So beschreibt beispielsweise Nägeli et al. in WO 2010/017651 die Synthese von hydrophilen Polyestern, wobei die hydrophilen Polymere, durch hydrophobe Endgruppen in einem nachfolgenden Reaktionsschritt verschlossen werden. Die grenzflächenaktiven Verbindungen werden zur Verwendung in beispielsweise Reinigungsmitteln vor allem aber als PEG freie Emulgatoren für kosmetische Formulierungen beansprucht.

Sulfonierte nicht endgruppenverkappte isosorbidhaltige Strukturen werden von Hayes et al. in US 6368710 beansprucht mit dem Ziel, Faser, Filme oder andere geformte Artikel herzustellen, mit einer verbesserten biologischen Abbaubarkeit.

Bislang unbekannt ist der Einsatz von Diolen auf Basis hydrierter und zweifach dehydratisierter Aldohexosen wie z.B. Isosorbid, für die bereits beschriebenen Anwendungsbereiche der amphiphilen Polykondensate als Textilhilfmittel, Soil-Release-Polymer oder als Hilfsmittel für die Herstellung von Papier.

Es wurde nun überraschender Weise gefunden, dass nichtionische isosorbidhaltige Polykondensate, die durch hydrophile Alkylalkoxylate Endgruppen verschlossen sind, neben eine verbesserten Primärwaschleistung auch eine verbesserte Soil-Release Wirkung zeigen als der Stand der Technik.

Gegenstand der Erfindung sind hydrophil terminierte Isosorbid enthaltende Polykondensate, die Einheiten, abgeleitet von Dicarbonsäuren und/oder deren Derivaten, von weiteren Diolen und/oder von Polyolen enthalten, gekennzeichnet dadurch, dass der Gehalt an Isosorbid mindestens 1 % beträgt.

Eine weitere bevorzugte Ausführungsform ist die Synthese von hydrophil terminierten isosorbidhaltigen Polykondensaten die Strukturelemente enthalten,
a) die sich ableiten von Di- und/oder Polycarbonsäuren und/oder deren Derivate, ausgewählt aus:
   - aromatischen Di- und/oder Polycarbonsäuren und/oder deren Salzen und/oder deren Anhydriden und/oder deren Ester,
   - aliphatischen und cycloaliphatischen Dicarbonsäuren, deren Salzen, deren Anhydriden und/oder deren Ester,
   - sulfogruppenhaltigen Dicarbonsäuren deren Salzen, deren Anhydriden und/oder deren Ester und
b) die sich ableiten von Isosorbid und weiteren Diolen und
c) oxalkylierten C1,-C24-Alkoholen und
d) Optional Polyolen, die sich ableiten von
e) sulfogruppenhaltigen Säuren, optional
f) von sulfogruppenhaltigen Alkoholen, optional
g) von Diolethern oder Polyolethern, optional.

Eine weitere bevorzugte Ausführungsform ist die Synthese von hydrophil terminierten isosorbidhaltigen Polykondensaten dadurch gekennzeichnet, dass man Dicarboxylverbindungen einsetzt, die sich ableiten von: Terephthalsäure, Phthalsäure, Isophthalsäure, Naphthalindicarbonsäure, Anthracendicarbonsäure, Biphenyldicarbonsäure, Terephthalsäure-, Phthalsäure-, Isophthalsäureanhydrid, Mono- und Dialkylester der Terephthalsäure, Phthalsäure, Isophthalsäure mit C1-C6-Alkoholen, bevorzugt Dimethylterephthalat, Diethylterephthalat und Di-n-propylterephthalat, Polyethylentherephtlat, Polypropylentheephthalat, Oxalsäure, Bernsteinsäure, Glutarsäure, Adipinsäure, Fumarsäure, Maleinsäure, Itakonsäure, Pimelinsäure, Korksäure, Azelain-säure, Sebacinsäure deren Anhydride, sowie die Mono- und Dialkylester der Carbonsäuren mit C1- C6-Alkoholen, z. B. Oxalsäurediethylester, Bernsteinsäurediethylester, Glutarsäurediethylester, Adipinsäuremethylester, Adipinsäurediethylester, Adipinsäure-di-n-butylester, Fumarsäureethylester und Maleinsäuredimethylester, 5-Sulfoisophthalsäure oder deren Alkali- oder Erdalkalisalze, insbesondere Lithium- und Natriumsalze oder Mono-, Di-, Tri- oder Tetraalkylammoniumsalze mit C1 bis C22-Alkylresten, Mono- und Dialkylester der 5-Sulfoisophthalsäure, 2-Naphtyldicarboxybenoylsulfonat, 2-Naphtyldicarboxybenzolsulfonat, Phenyl-Dicarboxy-benzolsulfonat, 2,6-Dimethylphenyl-3,5-Benzolsulfonat, Phenyl-3,5-Dicarboxybenzolsulfonat.

Eine weitere bevorzugte Ausführungsform ist die Synthese von hydrophil terminierten isosorbidhaltigen Polykondensaten, dadurch gekennzeichnet, dass man Dicarbonsäuren einsetzt, die sich ableiten von der Terephthalsäure und/oder Dialkylterephthalat, insbesondere Dimethyltherephthalat.

Eine weitere bevorzugte Ausführungsform ist die Synthese von hydrophil terminierten isosorbidhaltigen Polykondensaten, dadurch gekennzeichnet, dass man sulfogruppenhaltige Dicarbonsäuren und/oder deren Salze, deren Anhydriden und/oder deren Ester beispielsweise, 5-Sulfoisophthalsäure oder deren Alkali- oder Erdalkalisalze, insbesondere Lithium- und Natriumsalze oder Mono-, Di-, Tri- oder Tetraalkylammoniumsalze mit C1 bis C22-Alkylresten, 2-Naphtyldicarboxybenoylsulfonat, 2-Naphtyldicarboxybenzolsulfonat, Phenyl-Dicarbocybenzolsulfonat, 2,6-Dimethylphenyl-3,5-Benzolsulfonat, Phenyl-3,5-Dicarboxybenzolsulfonat einsetzt.

Eine weitere bevorzugte Ausführungsform ist die Synthese von hydophil terminierten isosorbidhaltigen Polykondensaten dadurch gekennzeichnet, dass man Endgruppen benutzt, wobei sich die Endgruppen ableiten von einer Verbindung gemäß der Formel (R3O(CHR1CHR2O)nH) wobei R1 und R2 unabhängig voneinander für Wasserstoff oder für eine Alkylgruppe mit 1 bis 4 Kohlenstoffatomen, vorzugsweise für Wasserstoff und/oder Methyl stehen, R3 für eine Alkylgruppe mit 1 bis 4 Kohlenstoffatomen steht und n eine Zahl im Bereich von 1 bis 50, bevorzugt 10 bis 30, besonders bevorzugt 15 bis 25 ist.

Eine weitere bevorzugte Ausführungsform ist die Synthese von hydrophil terminierten isosorbidhaltigen Polykondensaten dadurch gekennzeichnet, dass man zusätzlich zu Isosorbid Glykolbausteine einsetzt, die Strukturelemente enthalten, die sich ableiten von: Ethylenglykol, 1,2-Propylenglykol, 1,2-Butylenglykol.

Eine weitere bevorzugte Ausführungsform ist die Synthese von hydrophil terminierten isosorbidhaltigen Polykondensaten dadurch gekennzeichnet, dass man Polyalkylenbausteine einsetzt, die sich ableiten von: Polyethylenglykole und/oder Polypropylenglykole mit Molmassen von 200 bis 7.000, vorzugsweise 3.000 bis 6.000 g/mol, Polymerisationsprodukte aus Propylenglykol, Ethylenglykol und/oder Butylenglykol in Blöcken, gradientenartig oder auch in statistischer Verteilung mit Molmassen von 90 bis 7.000, vorzugsweise von 200 bis 5.000.

Eine weitere bevorzugte Ausführungsform ist die Synthese von hydrophil terminierten isosorbidhaltigen Polykondensaten dadurch gekennzeichnet, dass man vernetzende Polyglykole einsetzt, die Strukturelemente enthalten, die sich ableiten von: Polyolen, insbesondere Glycerin, Pentaerythrit, Trimethylolethan, Trimethylolpropan, 1,2,3-Hexantriol, Sorbit oder Mannit.

Eine weitere bevorzugte Ausführungsform ist die Synthese von hydrophil terminierten isosorbidhaltigen Polykondensaten dadurch gekennzeichnet, dass Endgruppen einsetzt werden, die sich ableiten von: oxalkylierten C1,-C22-Alkoholen, insbesondere Methanol, Ethanol, Octylalkohol, Decylalkohol, Laurylalkohol, Myristylalkohol oder Stearylalkohol, und die entsprechenden oxalkylierten, insbesondere ethoxylierten und/oder propoxylierten Alkohole, Alkylphenole, insbesondere Methanol, Ethanol, Octylphenol, Nonylphenol und Dodecylphenol und oxalkylierte C6-C18-Alkylphenole, Alkylamine, insbesondere C8-C24-Monoalkylamine und/oder oxalkylierte C8-C24-Alkylamine.

Eine weitere bevorzugte Ausführungsform der Erfindung ist die Synthese von hydrophil terminierten isosorbidhaltigen Polykondensaten enthaltend ionische Endkappen, die sich ableiten von sulfogruppenhaltigen Säuren, bevorzugt der 2-Hydroxyethansulfonsäure und der Sulfobenzoesäure.

Eine weitere bevorzugte Ausführungsform ist die Synthese von hydrophil terminerten isosorbidhaltigen Polykondensaten dadurch gekennzeichnet, dass man Endgruppen verwendet, wobei sich die Endgruppen ableiten von einer Verbindung gemäß der Formel (XO3S(CHR1CHR2O)nH), wobei R1 und R2 unabhängig voneinander für Wasserstoff oder für eine Alkylgruppe mit 1 bis 4 Kohlenstoffatomen, vorzugsweise für Wasserstoff und/oder Methyl stehen, X für Li, Na, K, Ca oder Mg steht und n eine Zahl im Bereich von 1 bis 50, bevorzugt 2 bis 10 ist.

Eine besonders bevorzugte Ausführungsform ist die Synthese von hydrophil terminerten isosorbidhaltigen Polykondensaten dadurch gekennzeichnet, dass man Komponenten zur Synthese verwendet, die sich ableiten von:
a) einer oder mehreren nichtionischen aromatischen Dicarbonsäuren oder deren C1-C4-Alkylestern,
b) 1,2-Propylenglykol,
c) C1-C8Alkylpolyalkylenglykolether mit einer mittleren Molmasse des Polyalkylenglykolethers von 200 bis 5.000 und
d) Isosorbid.

Auf Basis US 4702857 wurden nun nichtionisch verschlossene Polykondensate auf Basis 1,2-Propandiol hergestellt und sukzessive das 1,2 Propandiol gegen Isosorbid ausgetauscht. Das Verhältnis von Endgruppe und Dicarbonsäure wurde variiert, um die Löslichkeit der Verbindung zu optimieren. Als Katalysatorsystem wurde anstelle des toxischen Antimontrioxids das literaturbekannte Katalysatorsystem Titantetraisopropylat / Natriumacetat angewandt (siehe DE 19826356A1).

### Beispiele

In einen 250 mL Dreihalskolben, ausgestattet mit Magnetrührer, Kolone, Destillationsbrücke, Innenthermometer und Gaseinleitungsrohr werden 29,58 g Dimethylterephthalat, 34,78 g 1,2-Propandiol, Isosorbid (Mengen siehe Beispiele), 98 mg wasserfreies Natriumacetat und 53 µL Ti(OiPr)4 vorgelegt. Die Reaktionsmischung wird mit N2 inertisiert und anschließend auf 200°C erhitzt. Innerhalb von 90 Minuten werden ca. 9 mL Methanol abdestilliert. Nachdem die leicht gelbe viskose Masse auf 80°C abgekühlt ist, werden 82 g MPG750 dazu gegeben. Mit Hilfe eines Heizpilzes wird die Mischung auf ca. 200-220°C erhitzt und der Druck auf 1-2 mbar reduziert. Die Destillation setzt sich bei einer Innentemperatur von ca. 130°-226°C und 51°-94°C Kopftemperatur ein. Die Reaktionslösung verfärbt sich etwas während der Kondensationsphase. Die Destillation wird nach ca. 2,5 Stunden beendet wobei je nach eingesetzter Glykolmenge variierende Destillatmengen erhalten werden. Das Reaktionsprodukt wird als Wirksubstanz in fester bis zähflüssiger Form isoliert.

Analog zu Beispiel 1 können auch mit den folgenden Ausgangsstoffen die erfindungsgemäßen Polyester 4 und 5 hergestellt werden:

### Beispiel 2:

29,58 g Dimethylterephthalat
34,8 g 1,2 Propandiol
114,3 g Methylpolyethylenglykol 750
0,098 g Natriumacetat
53 µL Titantetraisopropylat

### Beispiel 3:

29,58 g Dimethylterephthalat
34,8 g 1,2 Propandiol
101 g Methylpolyethylenglykol 750
0,098 g Natriumacetat
53 µL Titantetraisopropylat

### Beispiel 4:

29,58 g Dimethylterephthalat
33,6 g 1,2 Propandiol
101 g Methylpolyethylenglykol 750
2,2 g Isosorbid
0,098 g Natriumacetat
53 µL Titantetraisopropylat

### Beispiel 5:

29,58 g Dimethylterephthalat
25,5 g 1,2 Propandiol
101 g Methylpolyethylenglykol 750
17,8 g Isosorbid
0,098 g Natriumacetat
53 µL Titantetraisopropylat

Der Erhalt der Isosorbid-Teilstruktur wurde durch 13C-NMR Spektroskopie bewiesen. Ein DEPT-Spektrum zeigt die charakteristischen 13C-Signale der Brückenkopfatome. Weiterhin drehen die erhaltenen Polykondensate in Lösung den Winkel des polarisierten Lichtes, so dass die optische Aktivität als einfaches Mittel zur inline Gehaltsbestimmung herangezogen werden kann.

Es wurde nun überraschend gefunden, dass hydrophil terminierte amphiphile isosorbidhaltige Polykondensate zugänglich sind, die eine deutlich verbesserte schmutzabweisende Wirkung zeigen, im Vergleich zum Stand der Technik. Offensichtlich haben die tetrahydrofuranartigen Partialstrukturen zusätzlichen Einfluss auf die Reinigungsleistung der Polykondensate.

Mit den auf diese Weise hergestellten Polykondensaten wurden nun Waschversuche durchgeführt. Als Basis dienten je 75 ml Spee Color Flüssig (Fa Henkel, UN 04167458) bei einem Härtegrad von 26°dt. Härte. Die Waschversuche wurden in einer Waschmaschine der Fa. Privileg, Sensation 9516, durchgeführt mit einer Standardbeladung von 3 kg Frottee - Baumwollgewebe, wobei jede andere handelsübliche Waschmaschine verwendet werden kann. Als Programm wurde das 30 min Kurzprogramm bei 30°C gewählt. Als Testgewebe wurde ein Dekoschal (Fertigvorhang, Bettenwelt GmbH & Co KG, D24976 Handewitt) in 5 cm x 5 cm große Quadrate geschnitten.

Die prinzipielle Vorgehensweise gestaltet sich in einer Vorwäsche mit dem zu untersuchenden Polymer, einer gezielten Anschmutzung mit einem Tropfen gebrauchten Motorenöl und nachfolgend einer einfachen Wäsche (Kurzprogramm 30 min). Die Ergebnisse werden mindestens dreimal wiederholt, die angegebenen Werte entsprechen den jeweiligen Mittelwerten.

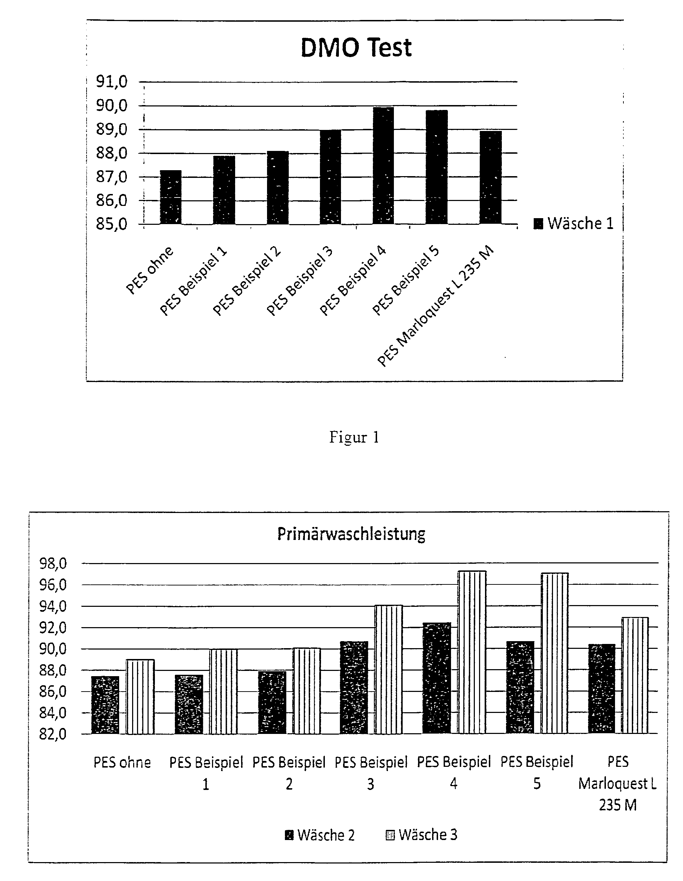

Die Proben werden jeweils getrocknet, mit einem handelsüblichen Scanner (Epson SX 100, 300 dpi) eingescannt und die erhalten jpg-Bilder mit einem handelsüblichen Bildauswerteprogramm (z.B. Gimp2) auf deren Helligkeit untersucht. Bei der Untersuchung der Polymerproben wurde jeweils der Vorwäsche und den nachfolgenden Wäschen je 0,5 g Polymersubstanz (100%) zugesetzt. Als kommerzielle Referenzsubstanz wurde Marloquest^{™} L 235 M (Sasol) verwendet. Aufgetragen ist jeweils der erreichte Helligkeitswert in % gegenüber dem einmalig vorbehandelten Gewebe (Figur 1).

Überraschend ist die gute Reinigungsleistung der isosorbidhaltigen Polykondensate gem. Beispiel 4 und 5. So übertreffen diese den Stand der Technik Marloquest L 235 M.

Eine weitere wichtige Eigenschaft der Polymere ist deren Primärwaschleistung. Zur Untersuchung dieser Eigenschaft wird Polyestergewebe wie bereits beschrieben ohne Polymerzugabe vorgewaschen, die Oberfläche mit einem Tropfen Altöl versetzt, getrocknet und nun mehrfach gewaschen in Anwesenheit eines Polymers. Die eingesetzten Mengen sowie die angewandten Waschbedingungen entsprechen denen des zuvor beschriebenen Soil Release Tests. Die nachfolgende Graphik (Figur 2) zeigt die Primärwaschleistungen der untersuchten Proben gegen eine Nullprobe (ohne Additiv) und den Stand der Technik mit Marloquest L 235 M nach der zweiten und dritten Wäsche.

Auch in diesem Fall zeigen die Proben aus Beispiel 4 und Beispiel 5 eine dem Stand der Technik überlegene Primärwaschleistung.

In Anlehnung an US 5415739 wurden zur Simulation der Verklebungsneigung Reißversuche durchgeführt. Hierzu wurde auf die nicht angeschmutzten

Referenzproben aus den vorgehenden Waschversuchen handelsüblicher Klebefilm (Tesa, Breite 1,5 cm, klar transparent) auf die Faser-Oberfläche geklebt und 20 min mit einem 100 g schweren Gewicht belastet. Nach Ablauf dieser Zeit wurde die Kraft bestimmt, um das Klebeband vom Textil zu entfernen. Der Ablösewinkel ist ca. 180° die Geschwindigkeit Imm/sec. Angegeben ist jeweils die höchste ermittelte Zugkraft während des Testes.

| | Zugkraft | Stdabw |
|---|---|---|
| | [g/cm] | |
| Standardgewebe | 28,7 | 2,2 |
| Polymer A US 5209823 | 22,3 | 1,5 |
| Marloquest L 235 M | 19,5 | 0,6 |
| Beispiel 4 | 16,3 | 2,0 |

Wie aus der Tabelle leicht ersehen werden kann, zeigt das isosorbidenthaltende Produkt gem Beispiel 4 eine deutlich verringerte Tendenz zur Ausbildung von Verklebungen gegenüber einem Standardklebeband.

## Patentansprüche

1. Hydrophil terminierte amphiphile Polykondensate mit einem Gehalt ab 1 Gew% an copolymerisiertem Diol auf Basis von hydrierten und zweifach dehydratisierten Aldo- und Ketohexosen und deren Applikation in Kombination mit Polyester- und polyesterhaltigen Oberflächen.

2. Die hydrophil terminierten amphiphilen Polykondensate gem. Anspruch 1 sind **dadurch gekennzeichnet, dass** sie nichtionischer oder anionischer Natur sind.

3. Das Diol gem. Anspruch 1 ist bevorzugt Isosorbid.

4. Die Verwendung dieser Polykondensate gem. Anspruch 1- 3 als Additive für die Anwendung in Wasch-und Reinigungsmitteln.

5. Die Verwendung dieser Polykondensate gem. Anspruch 1- 3 als Hilfsmittel für die Produktion von Papier zur Vermeidung von Rückständen auf Anlagenteilen während der Papierproduktion.

6. Die Verwendung dieser Polykondensate gem. Anspruch 1-3 als Hilfsmittel zur Beschichtung von Textilien.

7. Waschmittelzusammensetzungen enthaltend Polymere gem. Anspruch 1-3.

8. Textilien enthaltend Polymere gem. Anspruch 1-3.

9. Papier, Karton oder andere cellulosebasierten Produkte, zu deren Produktion Polymere gem. Anspruch 1-3 verwendet wurden.
